# EUROPÄISCHE PATENTSCHRIFT

(11) **EP 3 792 525 B1**
(45) Veröffentlichungstag und Bekanntmachung des Hinweises auf die Patenterteilung: **18.05.2022**
(21) Anmeldenummer: 20194038.4
(22) Anmeldetag: 02.09.2020
(51) Int. Cl.: F16H 63/30, F02B 67/06, F16H 3/22

(54) **SCHALTEINRICHTUNG, GETRIEBE MIT EINER SOLCHEN UND ERNTEMASCHINE**
SHIFT DEVICE, TRANSMISSION WITH SAME AND HARVESTER
DISPOSITIF DE CHANGEMENT DE VITESSE, ENGRENAGE DOTÉ D'UN TEL DISPOSITIF ET ENGIN D'ABATTAGE-FAÇONNAGE

(30) Priorität: 10.09.2019 DE 102019213717
(43) Veröffentlichungstag der Anmeldung: 17.03.2021
(73) Patentinhaber: Deere & Company, Moline, IL 61265 (US)
(72) Erfinder: JUNDALE, Prashant M, 68163 Mannheim (DE); DHOKE, Prathamesh, 68163 Mannheim (DE); KOLTE, Parag, 68163 Mannheim (DE); MORENO, Jorge, 68163 Mannheim (DE)
(74) Vertreter: Reichert, Christian

(56) Entgegenhaltungen:
- EP-A2- 0 160 199
- DE-A1- 3 339 560
- DE-C- 333 689
- DE-C2- 2 745 564
- US-A- 1 564 667

## Beschreibung

Die Erfindung betrifft eine Schalteinrichtung für ein Getriebe, mit einer Getriebewelle, einem darauf gelagerten Schaltzahnrad, wobei das Schaltzahnrad mit einer axial zur Getriebewelle verschiebbaren Verbindungsnabe ausgebildet ist, wobei die Verbindungsnabe eine Innenverzahnung aufweist, die mit einer Außenverzahnung der Getriebewelle in Eingriff steht, so dass das Schaltzahnrad auf der Getriebewelle axial verschiebbar mit dieser in Antriebsverbindung steht. Ferner betrifft die Erfindung ein Getriebe mit einer solchen Schalteinrichtung und eine Erntemaschine mit einem solchen Getriebe.

Schalteinrichtungen für Getriebe sowie Antriebsvorrichtungen mit Getrieben für antreibbare Bearbeitungseinrichtungen an Erntemaschinen sind bekannt und werden in verschiedener Form vielseitig eingesetzt. So offenbart beispielsweise die DE 2 745 564 C2 eine Antriebsvorrichtung für eine Bearbeitungseinrichtungen eines Mähdreschers, mit einem Riementrieb und einer Riemenscheibe, die auf einer zu einer Hauptantriebswelle konzentrischen Hohlwelle angeordnet ist. Auf der Hohlwelle ist ein Antriebszahnrad angeordnet und ein Schaltelement vorgesehen, welches in zwei Stellungen axial verschiebbar ist und die Hauptantriebswelle wahlweise mit jeweils einem mit dem Antriebszahnrad in Verbindung stehenden Zahnrad unterschiedlicher Drehrichtung verbindet, wobei das Schaltelement in einer ersten Stellung ein Sonnenrad eines Planetengetriebes über Planetenräder und ein zweites Sonnenrad mit der Hauptantriebswelle verbindet und in einer zweiten Stellung das Sonnenrad des Planetengetriebes über Planetenräder und einen Zahnkranzträger mit der Hauptantriebswelle in Verbindung bringt.

Die DE 2 744 344 C3 offenbart ebenfalls eine Antriebsvorrichtung für Erntemaschinen mit einem Riementrieb, welcher eine auf einer Abtriebswelle drehbar gelagerte Abtriebsscheibe aufweist. Der Riementrieb ist direkt oder über ein wahlweise zuschaltbares Reduziergetriebe indirekt mit einer Abtriebswelle in Antriebsverbindung bringbar, beispielsweise mit einer Abtriebswelle für eine Dreschtrommel.

DE 33 39 560 A1 , auf welche die zweiteilge Anspruchsfassung basiert, offenbart ein Übersetzungsgetriebe, bei welchem die Einrichtungen zum axialen Verschieben von Zahnkränzen in Form von Führungsschuhen ausgebildet sind, der zwischen die Zahnkränze eingreift und mit einem Zapfen verbunden ist, der von außen zugänglich und drehbar gelagert ist. Der Zapfen kann um 180° verdreht werden, um von einer stabilen der ersten Geschwindigkeit entsprechenden Stellung in eine stabile der zweiten Geschwindigkeit entsprechenden Stellung überzugehen.

EP 0 160 199 A1 offenbart ferner ein mehrstufiges Schaltgetriebe mit einer Antriebs- und Abtriebswelle. Die beiden Wellen sind jeweils sowohl mit ortsfest angeordneten als auch drehfest, jedoch längsverschieblich gelagerten Zahnrädern bestückt, wobei letztere durch jeweils zugeordnete Schaltelemente versetzbar sind, derart, dass in jeder Schaltstufe jeweils nur ein einziges Zahnradpaar miteinander in drehmomentübertragendem Eingriff steht.

DE 333 689 C offenbart zudem eine Einrichtung zum Verschieben von Zahnrädern von Wechselgetrieben für Kraftfahrzeuge. Eine selbsttätige Verriegelungsvorrichtung ist vorgesehen, die einen auf einen Steuerhebel ausgeübten Stelldruck blockieren soll.

Aus dem Stand der Technik sind auch andere Anordnungen von Schalteinrichtungen für Getriebe, insbesondere auch in Verbindung mit Riementriebe bekannt, die in landwirtschaftlichen Maschinen, insbesondere Erntemaschinen mit Bearbeitungseinrichtungen für aufgenommenes Erntegut, Anwendung finden. Dazu gehören beispielsweise Mähdrescher, Feldhäcksler oder auch Zuckerrohrernter oder auch andere Erntemaschinen, die eine Bearbeitung für aufgenommenes Erntegut in der Maschine vorsehen. So kann im Erntegutfluss beim Ernten des Ernteguts ein Dreschen, Häckseln, Schneiden oder eine andere Art der Bearbeitung vorgesehen sein, wobei für die Bearbeitungseinrichtungen, wie beispielsweise eine Häckseltrommel, verschiedene Antriebsstufen und damit eine Drehzahlvariation vorgesehen sind.

So sind beispielsweise Mähdrescher mit Häckseleinrichtungen bekannt, die einer Drescheinrichtung und einer Siebeinrichtung nachgeschaltet sind und ein Häckseln des überbleibenden Ernteguts vornehmen. Derartige Häckseleinrichtungen umfassen Häckseltrommeln, die, über einen Riemenantrieb angetrieben, beispielsweise in zwei verschiedenen Drehzahlen über ein entsprechendes Getriebe antreibbar sind. Die unterschiedlichen Drehzahlen dienen der Anpassung der Häckseleinrichtung an das Erntegut selbst sowie Anforderungen des Betreibers an das Häckselergebnis (Häcksellänge des Ernteguts). Dabei sind seitens des Betreibers auch Drescharbeiten ohne nachgeschaltetem Häckselbetrieb wünschenswert. Häckseleinrichtungen werden üblicherweise durch Riementriebe angetrieben, wobei der Riementrieb von einer mit dem Antriebsmotor der Erntemaschine verbundenen Riemenscheibe abgezweigt wird. Somit steht die Häckseleinrichtung in der Regel direkt mit der Drehzahl des Antriebsmotors in Verbindung, was dazu führt, dass auch die Komponenten an der Häckseleinrichtung, wie Dichtungen, Lager, Schmierung direkt von der der Drehzahl des Antriebsmotors beeinflusst sind. Da hohe Drehzahlen mitunter erforderlich sind, sind derartige Komponenten entsprechend auch für diese hohen Drehzahlen auszulegen, um auch den damit verbundenen hohen Temperaturen gerecht zu werden und Schäden, insbesondere bei Dichtungen zu vermeiden und den Verschleiß derselben zu reduzieren. Dies wiederum erfordert, spezielle Dichtungen und Schmierungseinrichtungen, was zu aufwändigeren Bauteilen und damit verbundenen höheren Kosten führt. Um dies zu vermeiden ist es wünschenswert bei hohen Drehzahlen des Antriebsmotors die Antriebsübersetzung zur Häckseleinrichtung anzupassen bzw. die Drehzahl der Häckseleinrichtung zu reduzieren, so dass zu hohe Drehzahlen vermieden werden können. Auch ist es ratsam eine Vorrichtung zu schaffen, durch die eine Häckseleinrichtung wahlweise vom Antrieb durch den Antriebsmotor entkoppelt werden kann. Bekannte Antriebseinrichtungen für Häckseleinrichtungen sehen bauliche Veränderungen zur Drehzahlreduzierung vor, beispielsweise das Entfernen von Verbindungsstiften oder anderen Koppelmitteln. Dies ist für den Betreiber stets mit einem gewissen Installations- und oder Umrüstaufwand verbunden, der zu Lasten der Effizienz und des Zeitmanagements geht.

Die der Erfindung zugrunde liegende Aufgabe wird darin gesehen, eine Schalteinrichtung der eingangs genannten Art anzugeben, durch welches die vorgenannten Probleme überwunden werden.

Die Aufgabe wird erfindungsgemäß durch eine Schalteinrichtung für ein Getriebe nach Anspruch 1 gelöst.

Weitere vorteilhafte Ausgestaltungen und Weiterbildungen der Erfindung gehen aus den Unteransprüchen hervor.

Erfindungsgemäß wird eine Schalteinrichtung für eine landwirtschaftliche Maschine der eingangs genannten Art derart ausgebildet, dass eine Rasteinrichtung vorgesehen ist, durch welche das Schaltzahnrad in mehrere Rastpositionen axial verschiebbar ist. Die Rasteinrichtung umfasst einen radial zur Getriebewelle verschiebbar gelagerten und federvorgespannten Stellstift, welcher mit einer in der Getriebewelle drehbar gelagerten Stellwelle im Eingriff steht, mittels welcher der Stellstift durch Verdrehen der Stellwelle aus einer Entriegelungsstellung in eine Verriegelungsstellung und umgekehrt bringbar ist. Die Rasteinrichtung ermöglicht, dass das Schaltzahnrad in mehrere Stellungen relativ zur Getriebewelle axial verschoben und anschließend fixiert bzw. verriegelt werden kann. Soll die axiale Position des Schaltrades erneut verändert werden, kann durch einfaches Betätigen der Stellwelle der Stellstift wieder gelöst bzw. entriegelt werden. Die Verriegelung bzw. Entriegelung des Stellstiftes erfolgt durch Verdrehen der Stellwelle, wobei die Stellwelle vorzugsweise um 180° verdrehbar ist und durch Verdrehen der Stellwelle der Stellstift bewegt und verschoben wird, wobei der Stellstift federvorgespannt ist und die Stellwelle unter Federvorspannung mit dem Stellstift in Eingriff steht bzw. bringbar ist.

Der Stellstift kann in einer sich radial zur Getriebewelle erstreckenden Durchgangsbohrung geführt sein, die sich von der Stellwelle zur Verbindungsnabe erstreckt, wobei die Durchgangsbohrung eine erste Öffnung zur Stellwelle und eine zweite Öffnung zur Verbindungsnabe aufweist. Der Stellstift kann somit in der Durchgangsbohrung axial beweglich geführt werden, wobei die Enden des Stellstiftes, je nach axialer Position des Stellstiftes in der Durchgangsbohrung, mehr oder weniger aus den sich gegenüberliegenden Öffnungen in den Bereich der Verbindungsnabe bzw. der Stellwelle hineinragen.

Die Verbindungsnabe ist getriebewellenseitig mit mehreren axial zur Getriebewelle beabstandeten Ringnuten versehen, die jeweils mit dem Stellstift in Eingriff bringbar sind. Die ausgebildeten Ringnuten bewirken eine Rastposition für das in den Bereich der Verbindungsnabe hineinragende Ende des Stellstiftes, wobei für jede Rastposition der Verbindungsnabe eine Ringnut vorgesehen ist, in die der Stellstift federvorgespannt hineinragen kann. Vorzugsweise sind drei axial zueinander versetzte Positionen für die Verbindungsnabe und damit drei axial zueinander beabstandete Ringnuten vorgesehen, wobei durchaus auch mehr oder weniger Ringnuten vorgesehen sein können.

Die Stellwelle ist um ihre Längsachse verdrehbar, wobei die Stellwelle einenends axial verschiebbar in einer in der Getriebewelle koaxial angeordneten Führungsbohrung und anderenends in einer in der Verbindungsnabe eingepassten Lagerbuchse verdrehbar gelagert ist.

Die Stellwelle weist eine koaxial zur Getriebewelle angeordnete Rotationsachse auf, wobei auf der Stellwelle ein Exzenterabschnitt angeordnet ist, der mit dem Stellstift in Eingriff bringbar ist, wobei der Exzenterabschnitt durch einen sich axial zur Stellwelle erstreckenden Zylinder mit einer Exzentermittenachse ausgebildet ist, die radial zur Rotationsachse der Stellwelle beabstandet ist. Der Durchmesser des Zylinders ist kleiner als der Durchmesser der Stellwelle bemessen ist, so dass durch Verdrehen der Stellwelle der federvorgespannte Stellstift aus einer Verriegelungsstellung in eine Entriegelungsstellung und umgekehrt bringbar ist. So ist für den Exzenterabschnitt der Stellwelle die Exzentermittenachse zur Rotationsachse der Stellwelle versetzt angeordnet. Dadurch, dass der Durchmesser in diesem Exzenterabschnitt kleiner gewählt ist als der Durchmesser der übrigen Stellwelle, ergibt sich der Effekt, dass sich durch Verdrehen der Stellwelle um ihre Rotationsachse der Exzenterabschnitt in einem gewissen Abstand zur Rotationsachse der Stellwelle um diese herum bewegt und sich ein Abstand der Zylindermantelfläche des Exzenterabschnitts beim Verdrehen der Stellwelle zu einer Wandung der Führungsbohrung der Stellwelle und damit auch zu den der Stellwelle zugewandten Öffnungen verändert. Der Durchmesser des Exzenterabschnittes und der Versatz der Exzentermittenachse zur Rotationsachse sind so bemessen, dass ein minimaler Abstand zwischen Zylindermantelfläche und Wandung der Führungsbohrung nahezu null ist und ein maximaler Abstand wenigstens einer Tiefe der in der Verbindungsnabe ausgebildeten Ringnuten entspricht, wobei der maximale Abstand und der minimale Abstand, durch Verdrehen der Stellwelle um 180° um die Rotationsachse, einstellbar ist.

Der Zylinder, der den Exzenterabschnitt darstellt, ist mit mehreren axial zur Getriebewelle beabstandeten Ringnuten versehen, die jeweils mit dem Stellstift in Eingriff bringbar sind und zu den in der Verbindungsnabe ausgebildeten Ringnuten fluchten. Wie oben bereits in Bezug auf die an der Verbindungsnabe ausgebildeten Ringnuten beschrieben ist, bewirken auch hier die im Exzenterabschnitt ausgebildeten Ringnuten eine Rastposition für das durch die erste Öffnung der Durchgangsbohrung in den Bereich der Stellwelle hineinragende Ende des Stellstiftes, wobei für eine durch Verschieben einstellbare Rastposition der Stellwelle in axialer Richtung zur Getriebewelle jeweils eine Ringnut vorgesehen ist.

Der Stellstift kann in einer ersten Ausführungsform einen ersten Stiftteil und einen zweiten Stiftteil umfassen, wobei sich zwischen dem ersten und dem zweiten Stiftteil des Stellstiftes eine Spannfeder erstreckt, die den ersten Stiftteil und den zweiten Stiftteil des Stellstiftes entlang der Durchgangsbohrung in entgegengesetzte Richtungen zu den Öffnungen der Durchgangsbohrung hin spannt. So erstreckt sich der erste Stiftteil des Stellstiftes in die erste Öffnung und der zweite Stiftteil des Stellstiftes in die zweite Öffnung der Durchgangsbohrung, so dass der Stellstift einen Ends mit der Verbindungsnabe und anderen Ends mit der Stellwelle in Eingriff steht, wobei die oben genannten Ringnuten die Rastpositionen für den Stellstift angeben.

In einer alternativen Ausführungsform ist der Stellstift einteilig ausgebildet. Dazu ist am Stellstift und in der Durchgangsbohrung jeweils ein Absatz vorgesehen, so dass der Stellstift an seinem der Verbindungsnabe zugewandten Ende einen größeren Durchmesser aufweist als an seinem der Stellwelle zugewandten Ende. Entsprechend ist die der Verbindungsnabe zugewandte Öffnung der Durchgangsbohrung mit einem größeren Durchmesser versehen als die der Stellwelle zugewandte Öffnung. Zwischen den Absätzen erstreckt sich eine Spannfeder, die den Stellstift in Richtung der Verbindungsnabe vorspannt, wobei sich der Stellstift einen Ends in die erste Öffnung und anderen Ends in die zweite Öffnung erstreckt, so dass der Stellstift einen Ends mit der Verbindungsnabe und anderen Ends mit der Stellwelle in Eingriff bringbar ist, wobei auch hier die oben genannten Ringnuten die Rastpositionen für den Stellstift angeben. Aufgrund der unterschiedlichen Durchmesser an den Enden des Stellstiftes sind die Ringnuten an der Verbindungsnabe breiter ausgebildet als die auf dem Exzenterbereich der Stellwelle ausgebildeten Ringnuten.

Der Stellstift ist mit sphärisch abgerundeten Enden versehen. Ferner sind die an der Verbindungsnabe ausgebildeten Ringnuten in einer zu den sphärisch abgerundeten Enden des Stellstiftes korrespondierenden Ringnutform ausgebildet. Des Weiteren sind an den Flanken der jeweiligen Ringnuten Steuerkanten ausgebildet, die sich durch einen gegenüber der Krümmung der sphärisch ausgebildeten Enden des Stellstiftes flacheren Verlauf auszeichnen. In den einzelnen Rastpositionen steht der Stellstift mit der jeweiligen Ringnut im Eingriff wodurch eine Arretierung für die Verbindungsnabe geschaffen wird. Um diese Arretierung zu überwinden, muss der Stellstifft durch axiales Verschieben der Verbindungsnabe aus der Ringnut heraus bewegt werden. Durch die flacher auslaufenden Steuerkanten and den Flanken der jeweiligen Ringnuten wird diese axiale Verschiebung der Verbindungsnabe erleichtert, durch die eine Stellkraft in axiale Richtung des Stellstiftes aufgebracht und wodurch der Stellstift aus seiner Rastposition aus der Ringnut heraus bewegt wird.

Die beschriebene Schalteinrichtung kann in verschiedenen Arten von Getrieben Einsatz finden, wobei die Schalteinrichtung zum Schalten des Getriebes aus einer direkten Antriebsverbindung in eine Antriebsverbindung mit Übersetzungsstufe betätigt wird. Das Getriebe sieht zumindest ein Antriebselement vor, beispielsweise eine Riemenscheibe, welches über die Schalteinrichtung mit der Getriebewelle, welche den Abtrieb bereitstellt, in Verbindung steht, wobei das Schaltzahnrad in beispielsweise einer ersten Rastposition oder Rastposition mit der Übersetzungsstufe in Eingriff gebracht wird, so dass der Antrieb über die Übersetzungsstufe auf die Getriebewelle erfolgt. In einer weiteren Rastposition bzw. Rastposition kann das Schaltzahnrad beispielsweise dann direkt mit dem Antriebselement in Eingriff stehen.

Weitere Schaltstellungen bzw. Schaltstufen oder Rastpositionen sind denkbar. So kann beispielsweise auch eine Neutralstellung, in der das Schaltzahnrad in einer weiteren Raststellung bzw. Rastposition frei bzw. leer läuft und in der keine Antriebsverbindung vorliegt, vorgesehen sein. Zudem können auch weitere Antriebsverbindungen in weiteren Raststellungen bzw. Rastpositionen mit weiteren Übersetzungsstufen vorgesehen sein.

Die Übersetzungsstufen können beispielsweise als Planetengetriebe ausgebildet sein, welches mit dem Antriebselement bereits in Verbindung steht. Das Planetengetriebe kann einen Planententräger aufweisen, der am Antriebselement angeordnet ist. Ein mit den Planeten im Eingriff stehendes Sonnenrad kann zwischen Getriebewelle und Antriebselement drehbar gelagert und gegenüber dem Antriebselement und der Getriebewelle festgestellt sein, beispielsweise an einem Gehäuse des Getriebes. Wird nun in dieser Konstellation das Schaltzahnrad aus einer direkten Antriebsverbindung zwischen Antriebselement und Getriebewelle heraus bewegt und in Verbindung mit den Planeten gebracht, dann erfolgt die Antriebsverbindung über die Planetenräder auf die Getriebewelle.

Das Antriebselement kann beispielsweise als Riemenscheibe ausgebildet sein, wobei die Getriebewelle mit einer Bearbeitungseinrichtung verbindbar ist. Als Bearbeitungseinrichtung kann beispielsweise eine Häckseltrommel vorgesehen sein, aber auch andere in einer Erntemaschine vorgesehene Bearbeitungseinrichtungen, wie Erntegutaufnehmer, Drescheinrichtungen, Streueinheiten und dergleichen, können über ein oben beschriebenes Getriebe bzw. über ein Getriebe mit einer oben beschriebenen Schalteinrichtung angetrieben werden.

So können Erntemaschinen Bearbeitungseinrichtungen umfassen, die mit dem oben beschriebenen Getriebe angetrieben werden. Ein als Riemenscheibe ausgebildetes Antriebselement kann beispielsweise durch einen Riementrieb angetrieben werden, wobei die Getriebewelle als Abtriebselement mit der Bearbeitungseinrichtung verbunden ist. Der Riementrieb kann dabei direkt mit dem Motor der Erntemaschine verbunden sein.

Anhand der Zeichnungen, die Ausführungsbeispiele der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Seitenansicht einer Erntemaschine in Form eines Mähdreschers mit einer Bearbeitungseinrichtung und einem dafür ausgebildeten Antrieb in Form eines Riementriebs,
Fig. 2 eine schematische Querschnittsansicht eines Getriebes für den Antrieb der Bearbeitungseinrichtung aus Figur 1 mit einer Riemenscheibe als Antriebselement und einer erfindungsgemäßen Schalteinrichtung,
Fig. 3 eine vergrößerte schematische Querschnittsansicht der Schalteinrichtung aus Figur 2,
Fig. 4 eine weitere vergrößerte schematische Querschnittsansicht der Schalteinrichtung aus Figur 2 oder 3 mit einer Stellwelle in Entriegelungsstellung,
Fig. 5 eine weitere vergrößerte schematische Querschnittsansicht der Schalteinrichtung aus Figur 2 oder 3 mit einer Stellwelle in Verriegelungsstellung,
Fig. 6 eine perspektivische schematische Ansicht der Stellwelle aus den Figuren 2 bis 5,
Fig. 7A eine perspektivische schematische Ansicht der Schalteinrichtung aus den Figuren 2 bis 5 mit einem Schaltzahnrad in einer ersten Schaltstellung in direkter Antriebsverbindung mit der Riemenscheibe,
Fig. 7B eine perspektivische schematische Ansicht der Schalteinrichtung aus den Figuren 2 bis 5 mit dem Schaltzahnrad in einer zweiten Schaltstellung ohne Antriebsverbindung (Neutralstellung),
Fig. 7C eine perspektivische schematische Ansicht der Schalteinrichtung aus den Figuren 2 bis 5 mit dem Schaltzahnrad in einer dritten Schaltstellung in Antriebsverbindung mit dem Planetengetriebe und
Fig. 8 eine vergrößerte schematische Querschnittsansicht der Schalteinrichtung aus den Figuren 2 bis 7C mit einer alternativen Ausführungsform für einen Stellstift und somit ein alternatives Ausführungsbeispiel der erfindungsgemäßen Schalteinrichtung;

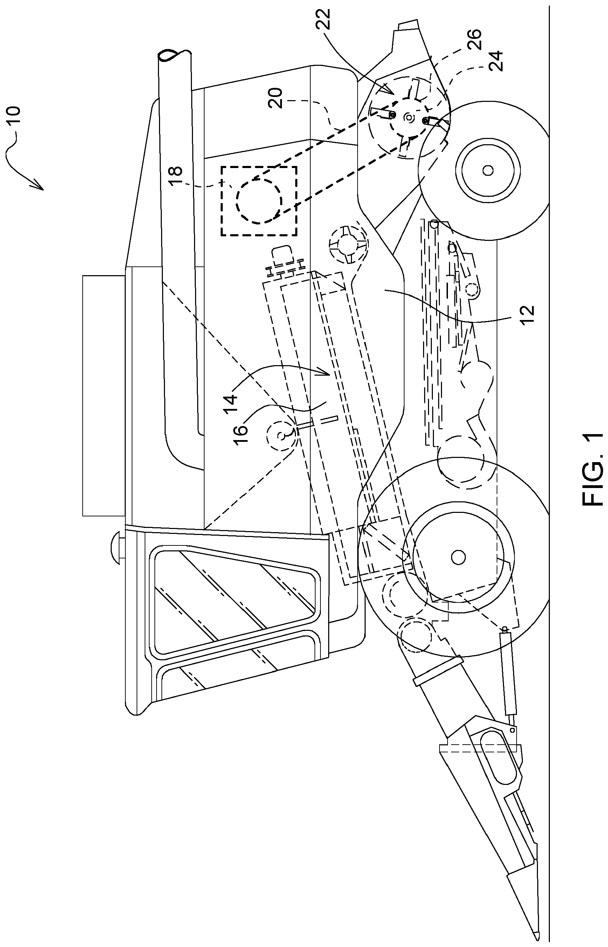

Figur 1 zeigt eine selbstfahrende landwirtschaftliche Maschine 10, die beispielhaft in Form eines Mähdreschers ausgebildet ist. Denkbar ist durchaus auch, dass das im Folgenden weiter beschriebene Ausführungsbeispiel auch an einer andersartigen selbstfahrenden landwirtschaftlichen Maschine, beispielsweise einem Feldhäcksler, einer Mähmaschine, einem Zuckerrohrernter oder einer Ballenpresse ausgebildet sein kann.

Die landwirtschaftliche Maschine 10 weist ein Maschinengehäuse 12 und eine erste Bearbeitungseinrichtung 14 in Form einer Drescheinrichtung 16 mit einem in Längsrichtung der landwirtschaftlichen Maschine 10 ausgerichteten Axialrotor auf. Die landwirtschaftliche Maschine 10 wird von einem (nur schematisch dargestellten) Verbrennungsmotor 18 angetrieben. Der Verbrennungsmotor 18 ist ausgangsseitig mit einem Antriebsriemen 20 verbunden durch welchen eine weitere Bearbeitungseinrichtung, hier eine Häckseleinrichtung 22 mit Häckseltrommel 24, angetrieben wird. Der Antriebsriemen 20 ist dazu mit einer Riemenscheibe 26 verbunden, die als Antriebselement für ein Getriebe 28 der Häckseleinrichtung 22 dient.

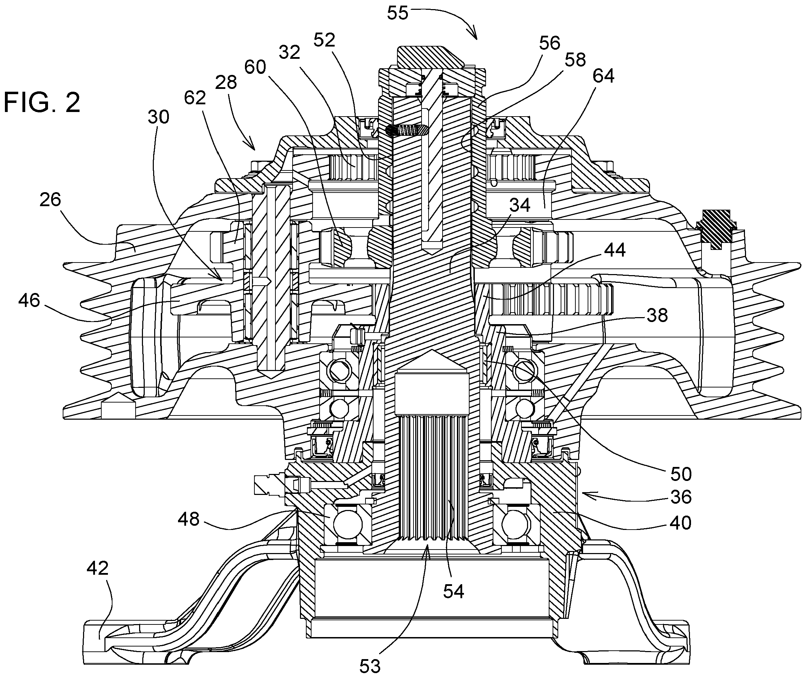

Das Getriebe 28 ist detailliert in Figur 2 dargestellt und umfasst, neben der Riemenscheibe 26, einen in der Riemenscheibe 26 gelagerten Doppelplanetenrädersatz 30, wobei die Riemenscheibe 26 als Planetenträger dient, eine in der Riemenscheibe 26 ausgebildete Innenverzahnung 32, sowie eine Getriebewelle 34, die als Abtriebswelle dient und zum Antrieb der Häckseltrommel 24 mit dieser verbindbar ist. Das Getriebe 28 umfasst ferner eine als Hohlprofil ausgebildete Befestigungsnabe 36, welche einen, bezogen auf die Riemenscheibe 26, innen liegenden Befestigungsnabenteil 38 und einen damit drehfest verbundenen außen liegenden Befestigungsnabenteil 40 umfasst. Der außen liegende Befestigungsnabenteil 40 ist mit einem am Maschinengehäuse 12 ausgebildeten Befestigungsflansch 42 drehfest verbunden. Auf dem innen liegenden Befestigungsnabenteil 38 ist ein Sonnenrad 44 ausgebildet, welches mit einem ersten Planetenrädersatz 46 des Doppelplanetenrädersatzes 30 in Eingriff steht. Die Befestigungsnabe 36 dient ferner zur Lagerung der Riemenscheibe 26 und der Getriebewelle 34, wobei die Riemenscheibe 26 axial fixiert und rotierbar auf der Außenumfangsseite der Befestigungsnabe 36 am innen liegenden Befestigungsnabenteil 38 gelagert ist. Die Getriebewelle 34 ist axial fixiert und rotierbar auf der Innenumfangsseite der Befestigungsnabe 36 gelagert, wobei eine erste Lagerstelle 48 am außen liegenden Befestigungsnabenteil 40 und eine zweite Lagerstelle 50 am innen liegenden Befestigungsnabenteil 38 ausgebildet ist.

Die Getriebewelle 34 weist an einem sich innerhalb der Riemenscheibe 26 erstreckenden Ende eine Außenverzahnung 52 und an einem sich innerhalb der Befestigungsnabe 36 erstreckenden Ende in einem Hohlraum 53 ausgebildete Innenverzahnung 54 auf. Die im Hohlraum 53 ausgebildete Innenverzahnung 54 dient zum Anschluss der Getriebewelle 34 an die Häckseleinrichtung 22 bzw. Häckseltrommel 24. Ferner ist das Getriebe 28 mit einer Schalteinrichtung 55 ausgestattet. Dazu ist auf der Außenverzahnung 52 eine axial verschiebbare Verbindungsnabe 56 angeordnet, wobei die Verbindungsnabe 56 eine Innenverzahnung 58 aufweist, die in die Außenverzahnung 52 der Getriebewelle 34 eingreift. Die Schalteinrichtung 55 umfasst ferner ein auf der Verbindungsnabe 56 angeordnetes und damit drehfest verbundenes Schaltzahnrad 60, so dass das Schaltzahnrad 60 über die Verbindungsnabe 56 auf der Getriebewelle 34 axial verschiebbar mit der Getriebewelle 34 in Antriebsverbindung steht.

Das Schaltzahnrad 60 ist derart bemessen, dass es durch axiales Verschieben der Verbindungsnabe 56 auf der Getriebewelle 34 zum einen mit einem zweiten Planetenrädersatz 62 des Doppelplanetenrädersatzes 30 und zum anderen mit der in der Riemenscheibe 26 ausgebildete Innenverzahnung 32 in Eingriff bringbar ist. Des Weiteren ist innerhalb der Riemenscheibe 26 in axialer Richtung zwischen dem zweiten Planetenrädersatz 62 und der Innenverzahnung 32 ein Freiraum 64 ausgebildet, in welchen das Schaltzahnrad 60 eingriffsfrei axial verschiebbar ist.

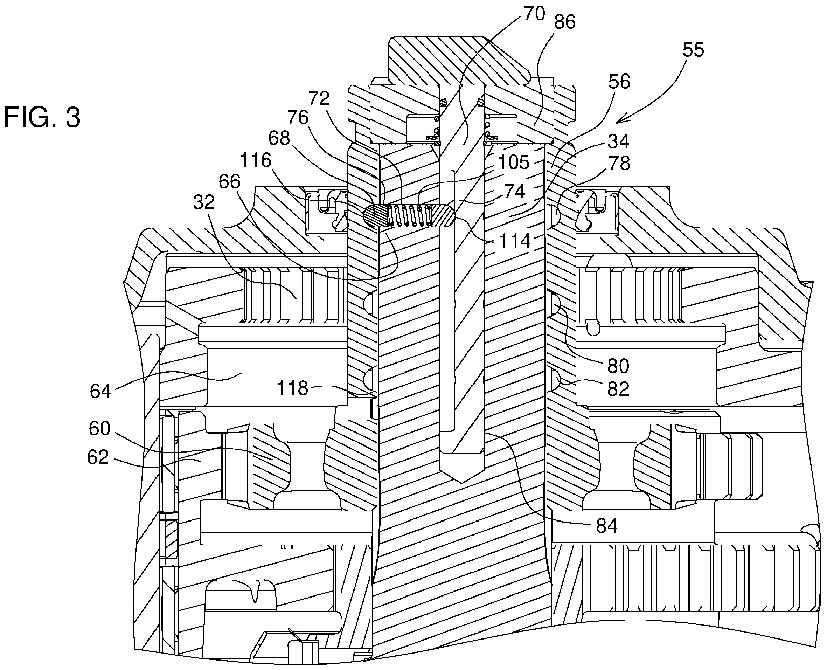

Die Schalteinrichtung 55 ist ferner mit einer Rasteinrichtung 66 ausgestattet (Figur 3), durch welche die Verbindungsnabe 56, und damit das Schaltzahnrad 60, in mehrere Rastpositionen R1, R2, R3 axial verschiebbar ist. Die Rasteinrichtung 66 umfasst einen radial zur Getriebewelle 34 verschiebbar gelagerten und federvorgespannten Stellstift 68, welcher mit einer in der Getriebewelle 34, koaxial zur Getriebewelle 34, drehbar gelagerten Stellwelle 70 im Eingriff steht. Der Stellstift 68 ist in einer sich radial zur Getriebewelle 34 erstreckenden Durchgangsbohrung 72 geführt, die sich von der Stellwelle 70 zur Verbindungsnabe 56 erstreckt, wobei die Durchgangsbohrung 72 eine erste Öffnung 74 zur Stellwelle 70 und eine zweite Öffnung 76 zur Verbindungsnabe 56 aufweist. Der Stellstift 68 kann somit in der Durchgangsbohrung 72, axial zur Durchgangsbohrung 72 beweglich, geführt werden, wobei die Enden des Stellstiftes 68, je nach axialer Position des Stellstiftes 68 in der Durchgangsbohrung 72, mehr oder weniger aus den sich gegenüberliegenden Öffnungen 74, 76 in den Bereich der Verbindungsnabe 56 bzw. der Stellwelle 70 hineinragen.

Die Verbindungsnabe 56 ist getriebewellenseitig mit mehreren axial zur Getriebewelle 34 beabstandeten Ringnuten 78, 80, 82 versehen, die jeweils mit dem Stellstift 68 in Eingriff bringbar sind. Die ausgebildeten Ringnuten 78, 80, 82 bewirken jeweils eine Rastposition R1, R2, R3 für das in den Bereich der Verbindungsnabe 56 hineinragende Ende des Stellstiftes 68, wobei für jede einstellbare Rastposition R1, R2, R3 eine Ringnut 78, 80, 82 vorgesehen ist, in die der Stellstift 68 federvorgespannt hineinragen kann. In dem dargestellten Ausführungsbeispiels sind drei axial zueinander versetzte Rastposition R1, R2, R3 für die Verbindungsnabe 56 und damit drei axial zueinander beabstandete Ringnuten 78, 80, 82 vorgesehen.

Die Stellwelle 70 ist um ihre Längsachse verdrehbar, wobei die Stellwelle 70 einenends axial verschiebbar in einer in der Getriebewelle 34 koaxial angeordneten Führungsbohrung 84 und anderenends in einer in der Verbindungsnabe 56 eingepassten Lagerbuchse 86 drehbar gelagert ist. Damit wird gewährleistet, dass die Stellwelle 70 zum einen axial verschiebbar zur Getriebewelle 34 gelagert ist, jedoch die Stellwelle 70 und Verbindungsnabe 56 gegenüber der Getriebewelle 34 stets gemeinsam axial verschoben werden.

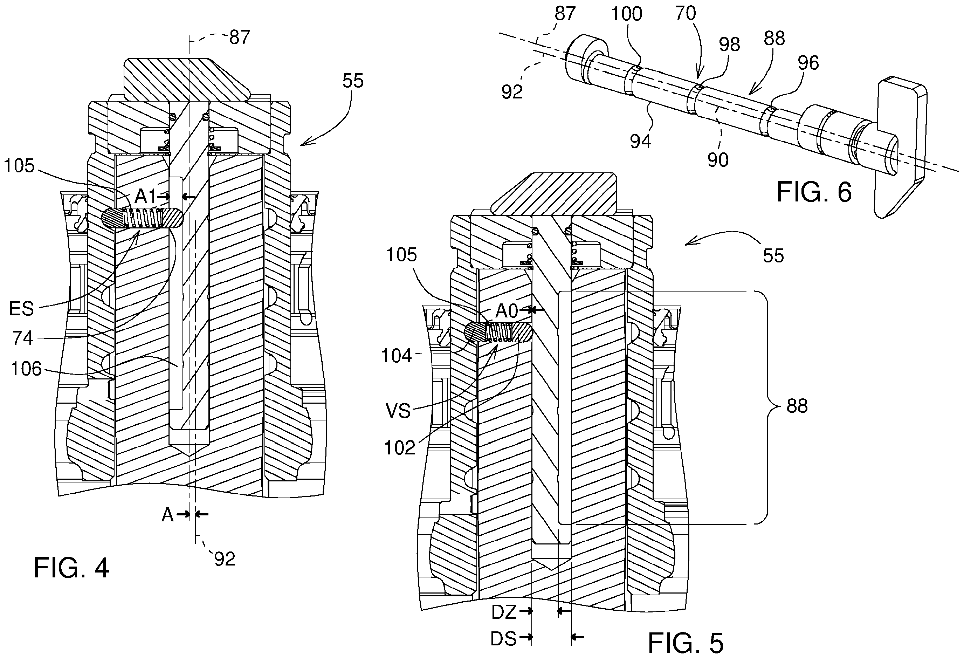

Wie im Detail in den Figuren 4 bis 6 erkennbar ist, weist die Stellwelle 70 eine koaxial zur Getriebewelle 34 angeordnete Rotationsachse 87 auf, wobei auf der Stellwelle 70 ein Exzenterabschnitt 88 angeordnet ist, der mit dem Stellstift 68 in Eingriff bringbar ist, wobei der Exzenterabschnitt 88 durch einen sich axial zur Stellwelle 70 erstreckenden Zylinder 90 mit einer Exzentermittenachse 92 ausgebildet ist, die radial zur Rotationsachse 87 der Stellwelle 70 beabstandet ist (Abstand A). Der Durchmesser DZ des Zylinders 90 ist kleiner als der Durchmesser DS der Stellwelle 70 bemessen, so dass durch Verdrehen der Stellwelle 70 um 180° der federvorgespannte Stellstift 68 aus einer Verriegelungsstellung VS in eine Entriegelungsstellung ES und umgekehrt bringbar ist (Figur 4 zeigt die Stellwelle 70 bzw. den Stellstift 68 in der Entriegelungsstellung ES und Figur 5 in der Verriegelungsstellung VS). So ist für den Exzenterabschnitt 88 der Stellwelle 70 die Exzentermittenachse 92 zur Rotationsachse 87 der Stellwelle 70 versetzt angeordnet. Dadurch, dass der Durchmesser DZ in diesem Exzenterabschnitt 88 kleiner gewählt ist als der Durchmesser DS der übrigen Stellwelle70, ergibt sich der Effekt, dass sich durch Verdrehen der Stellwelle 70 um ihre Rotationsachse 87, der Exzenterabschnitt 88 in einem gewissen Abstand zur Rotationsachse 87 der Stellwelle 70 um diese herum bewegt und sich ein Abstand A1, A0 zwischen der Wandung der Führungsbohrung 84 bzw. zwischen der ersten Öffnung 74 und einer der Wandung bzw. der ersten Öffnung zugewandten Zylindermantelfläche 94 des Exzenterabschnitts 88, beim Verdrehen der Stellwelle 70 verändert (siehe Figur 4 und Figur 5 im Vergleich). Der Durchmesser DZ des Exzenterabschnittes 88 und der Versatz der Exzentermittenachse 92 zur Rotationsachse 87 sind so bemessen, dass ein minimaler Abstand A0 zwischen Zylindermantelfläche 94 und Wandung der Führungsbohrung 84 bzw. zwischen der ersten Öffnung 74 und der Zylindermantelfläche 94 nahezu null ist und ein maximaler Abstand A1 wenigstens der Tiefe der in der Verbindungsnabe 56 ausgebildeten Ringnuten 78, 80, 82 entspricht, wobei der maximale Abstand A1 und der minimale Abstand A0, durch Verdrehen der Stellwelle 70 um 180° um die Rotationsachse 87, einstellbar ist.

Der Zylinder 90, der den Exzenterabschnitt 88 ausbildet, ist mit mehreren axial zur Getriebewelle 34 beabstandeten Ringnuten 96, 98, 100 versehen, die jeweils mit dem Stellstift 68 in Eingriff bringbar sind und zu den in der Verbindungsnabe 56 ausgebildeten Ringnuten 78, 80, 82 fluchten. Wie oben bereits in Bezug auf die an der Verbindungsnabe 56 ausgebildeten Ringnuten 78, 80, 82 beschrieben ist, bewirken auch hier die im Exzenterabschnitt ausgebildeten Ringnuten 96, 98, 100 eine Rastposition für das durch die erste Öffnung 74 der Durchgangsbohrung 72 in den Bereich der Stellwelle 70 hineinragende Ende des Stellstiftes 68, wobei für eine durch Verschieben einstellbare Rastposition der Stellwelle 70 in axialer Richtung zur Getriebewelle 34 jeweils eine Ringnut vorgesehen ist.

Der Stellstift 68 ist in einer ersten Ausführungsform (gemäß den Figuren 2 bis 5 und 7A bis 7C) mit einem ersten Stiftteil 102 und einen zweiten Stiftteil 104 ausgebildet, wobei sich zwischen dem ersten und dem zweiten Stiftteil 102, 104 des Stellstiftes 68 eine Spannfeder 105 erstreckt, die den ersten Stiftteil 102 und den zweiten Stiftteil 104 des Stellstiftes 68 entlang der Durchgangsbohrung 72, in entgegengesetzte Richtungen zu den Öffnungen 74, 76 der Durchgangsbohrung 72 hin, auseinander spannt. So erstreckt sich der erste Stiftteil 102 des Stellstiftes 68 in die erste Öffnung 74 und der zweite Stiftteil 104 des Stellstiftes 68 in die zweite Öffnung 76 der Durchgangsbohrung 72. Der Stellstift 68 steht somit einenends mit der Verbindungsnabe 56 und anderenends mit der Stellwelle 70 in Eingriff, wobei die oben genannten Ringnuten 78, 80, 82 und 96, 98, 100 die Rastpositionen für den Stellstift 68 vorgeben. In der in Figur 4 dargestellten Verdrehstellung der Stellwelle 70 ist der maximale Abstand A1 eingestellt und zwischen der ersten Öffnung 74 und dem Exzenterabschnitt 88 ein Freiraum 106 ausgebildet, in diesen sich der Stellstift 68 mit seinem ersten Stiftteil 102 erstrecken kann. In dieser Verdrehstellung der Stellwelle 70 nimmt der Stellstift 68 seine "federentspannte" Entriegelungsstellung ES ein, in welcher die Verbindungsnabe 56 axial verschoben werden kann, indem sich der zweite Stiftteil 104 aus den Ringnuten 78, 80, 82 bewegen und sich die Spannfeder 105 komprimieren lässt. In der in Figur 5 dargestellten Verdrehstellung der Stellwelle 70 ist nunmehr der minimale Abstand A0 eingestellt, wobei sich der Freiraum 106 durch Verdrehen der Stellwelle 70 verlagert hat. Der Exzenterabschnitt 88 drückt in dieser Verdrehstellung den Stellstifft 68 zusammen und in die Ringnut 78 hinein. In dieser Verdrehstellung der Stellwelle 70 nimmt der Stellstift 68 seine Verriegelungsstellung VS ein, in der die Spannfeder 105 gänzlich zusammengedrückt ist, so dass sich der erste Stiftteil 102 in der Durchgangsbohrung 72 befindet und der zweite Stiftteil 104 fest in der Ringnut sitzt und ein axiales Verschieben der Verbindungsnabe 56 wirksam blockiert.

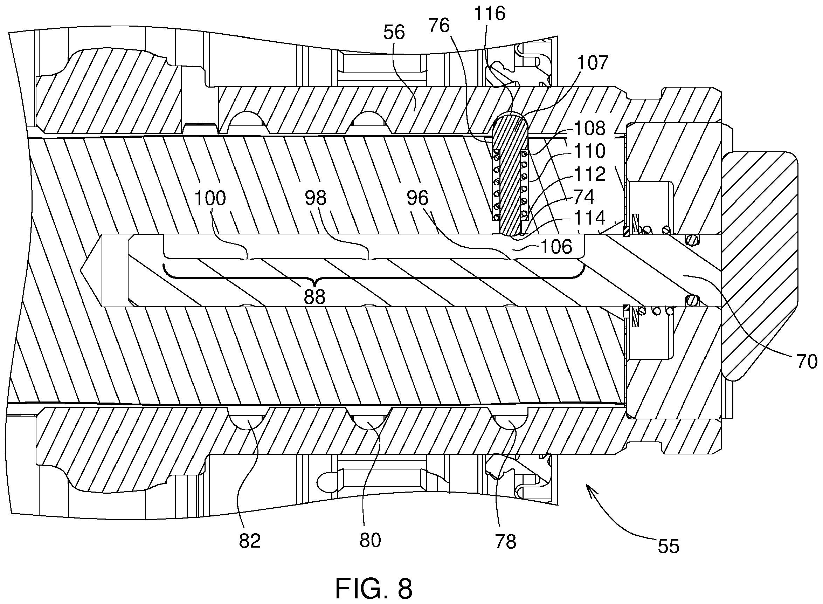

In einer alternativen Ausführungsform gemäß Figur 8 ist ein Stellstift 107 einteilig ausgebildet. Ferner ist am Stellstift 107 ein Absatz 108 vorgesehen, so dass der Stellstift 107 an einem der Verbindungsnabe 56 zugewandten Ende einen größeren Durchmesser aufweist als an einem der Stellwelle 70 zugewandten Ende. Dazu ist, gegenüber der oben beschriebenen Ausführungsform, eine abgeänderte Durchgangsbohrung 110 vorgesehen, in dem hier die Durchgangsbohrung 110 an ihrem der Stellwelle 70 zugewandten Ende ebenfalls mit einem Absatz 112 ausgebildet ist, derart, dass die der Verbindungsnabe 56 zugewandte zweite Öffnung 76 der Durchgangsbohrung 110 mit einem größeren Durchmesser versehen ist, als die der Stellwelle 70 zugewandte erste Öffnung 74. Zwischen den Absätzen 108 und 112 erstreckt sich die Spannfeder 105, die den Stellstift 107 in Richtung der Verbindungsnabe 56 vorspannt, wobei sich der Stellstift 107 einenends in die erste Öffnung 74 und anderenends in die zweite Öffnung 76 erstreckt, so dass der Stellstift 107 einenends mit der Verbindungsnabe 56 und anderenends mit der Stellwelle 70 in Eingriff bringbar ist. Im Übrigen gleicht die Schalteinrichtung 55 mit dem Stellstift 106 gemäß der alternativen Ausführungsform , die das alternative Ausführungsbeispiel der vorliegenden Erfindung darstellt, der oben beschriebenen erfindungsgemäßen Schalteinrichtung 55 mit dem Stellstift 68. Auch hier geben die Ringnuten 78, 80, 82 und 96, 98, 100 die Rastpositionen für den Stellstift 107 vor. Aufgrund der unterschiedlichen Durchmesser an den Enden des Stellstiftes 107 sind die Ringnuten 78, 80, 82 an der Verbindungsnabe 56 breiter ausgebildet als die auf dem Exzenterbereich 88 der Stellwelle 70 ausgebildeten Ringnuten 96, 98, 100. In der in Figur 8 dargestellten Verdrehstellung der Stellwelle 70 ist eine Entriegelungsstellung ES für den Stellstift 107 geschaffen, da dieser durch axiales Verschieben der Verbindungsnabe 56 in den Freiraum 106 bewegt werden kann. Durch Verdrehen der Stellwelle 70 um 180° würde der Stellstift 107 blockiert und in die Verriegelungsstellung VS verbracht werden, wobei der Exzenterabschnitt 88 in dieser Verdrehstellung den Stellstifft 107 in die Ringnut 78 drückt und ihn dort hält bzw. blockiert.

In dieser Verdrehstellung der Stellwelle 70 nimmt der Stellstift 107 seine Verriegelungsstellung VS ein, in der ein axiales Verschieben der Verbindungsnabe 56 wirksam blockiert wird.

In beiden Ausführungsbeispielen der vorliegenden Erfindung ist der Stellstift 68, 107 mit sphärisch abgerundeten Enden 114, 116 versehen. Ferner sind die an der Verbindungsnabe 56 ausgebildeten Ringnuten 78, 80, 82, als auch die in der Stellwelle 70 ausgebildeten Ringnuten 96, 98,100 in einer zu den sphärisch abgerundeten Enden des Stellstiftes 68, 107 korrespondierenden Ringnutform ausgebildet. Des Weiteren sind an den Flanken der jeweiligen Ringnuten der Verbindungsnabe 56 Steuerkanten 118 ausgebildet, die sich durch einen gegenüber der Krümmung der der Verbindungsnabe 56 zugewandten sphärisch ausgebildeten Enden 116 des Stellstiftes 68, 107 flacheren Verlauf auszeichnen. In den einzelnen Rastpositionen steht der Stellstift 68, 107 mit der jeweiligen Ringnut 78, 80, 82 der Verbindungsnabe 56 im Eingriff wodurch eine Arretierung für die Verbindungsnabe 56 geschaffen wird. Um diese Arretierung zu überwinden, muss der Stellstifft 68, 107 nun durch axiales Verschieben der Verbindungsnabe 56 aus der Ringnut 78, 80, 82 heraus bewegt werden. Durch die flacher auslaufenden Steuerkanten 118 an den Flanken der jeweiligen Ringnuten 78, 80, 82 wird diese axiale Verschiebung der Verbindungsnabe 56 erleichtert und eine Stellkraft in axiale Richtung des Stellstiftes 68, 107 aufgebracht, wodurch der Stellstift 68, 107 aus der Ringnut 78, 80, 82 heraus bewegt wird.

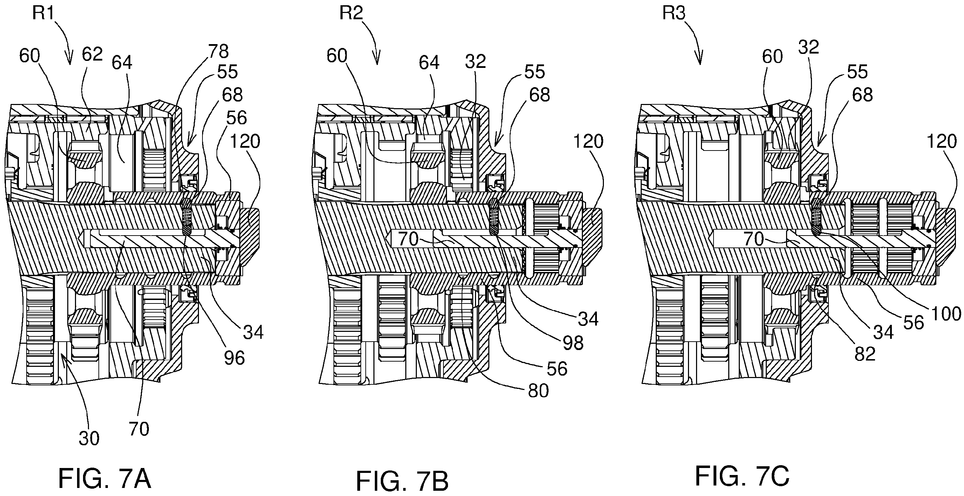

Wie nun in den Figuren 7A, 7B und 7C dargestellt ist, kann das Schaltzahnrad 60 in drei verschiedene Rastpositionen R1, R2, R3 bewegt werden. Bei den in den Figuren 7A, 7B und 7C dargestellten Rastpositionen befindet sich der Stellstift 68 bereits in der Entriegelungsstellung ES. Durch Betätigung eines am freien Ende der Stellwelle 70 ausgebildeten Griffs kann die Stellwelle 70 verdreht und der Stellstifft 68 in die Verriegelungsstellung VS gemäß Figur 5 verbracht werden. Durch erneutes Verdrehen der Stellwelle 70 um 180°, kann der Stellstift wieder in die Entriegelungsstellung ES gemäß den Figuren 2 bis 4 und 7A, 7B, 7C sowie Figur 8 verbracht werden.

In der ersten Rastposition R1, die in Figur 7A dargestellt ist, ist die Verbindungsnabe 56 in eine eingerückte Position zur Getriebewelle 34 verbracht. Der Stellstift 68 befindet sich im Eingriff mit den Ringnuten 78 und 96. Das Schaltzahnrad 60 steht in Antriebsverbindung mit dem zweiten Planetenrädersatz 62 des Doppelplanetenträgersatzes 30. In dieser Schaltstellung bzw. Rastposition R1 wird eine Antriebsübersetzung von der Riemenscheibe 26 über den Doppelplanetenträgersatz 30 erzielt.

In der zweiten Rastposition R2, die in Figur 7B dargestellt ist, ist die Verbindungsnabe 56 in eine mittlere Position zur Getriebewelle 34 verbracht. Der Stellstift 68 befindet sich im Eingriff mit den Ringnuten 80 und 98. Das Schaltzahnrad 60 steht in keiner Antriebsverbindung und dreht leer in dem zwischen zweiten Planetenrädersatz 62 und Innenverzahnung 32 ausgebildeten Freiraum 64. In dieser Schaltstellung bzw. Rastposition R2 ist besteht keine Antriebsverbindung zwischen Riemenscheibe 26 und Getriebewelle 34.

In der dritten Rastposition R3, die in Figur 7C dargestellt ist, ist die Verbindungsnabe 56 in eine ausgerückte Position zur Getriebewelle 34 verbracht. Der Stellstift 68 befindet sich im Eingriff mit den Ringnuten 82 und 100. Das Schaltzahnrad 60 steht in Antriebsverbindung mit der Innenverzahnung 32. In dieser Schaltstellung bzw. Rastposition R3 wird eine direkte Antriebsübersetzung von der Riemenscheibe 26 auf die Getriebewelle 34 erzielt.

Die oben beschriebenen und in den Figuren 7A, 7B und 7C dargestellten Rastpositionen R1, R2, R3 finden in gleicher Weise Anwendung auf eine Ausführungsform mit einem Stellstift 107 nach Figur 8.

## Patentansprüche

1. Schalteinrichtung (55) für ein Getriebe (28), mit einer Getriebewelle (34), einem darauf gelagerten Schaltzahnrad (60), wobei das Schaltzahnrad (60) mit einer axial zur Getriebewelle (34) verschiebbaren Verbindungsnabe (56) ausgebildet ist, wobei die Verbindungsnabe (56) eine Innenverzahnung (58) aufweist, die mit einer Außenverzahnung (52) der Getriebewelle (34) in Eingriff steht, so dass das Schaltzahnrad (60) auf der Getriebewelle (34) axial verschiebbar mit dieser in Antriebsverbindung steht, und einer Rasteinrichtung (66), durch welche das Schaltzahnrad (60) in mehrere Rastpositionen (R1, R2, R3) axial verschiebbar ist, wobei die Rasteinrichtung (66) ein radial zur Getriebewelle (34) verschiebbar gelagerten und federvorgespannten Stellstift (68, 107) umfasst, **dadurch gekennzeichnet, dass** der Stellstift (68, 107) mit einer in der Getriebewelle (34) drehbar gelagerten Stellwelle (70) im Eingriff steht, mittels welcher der Stellstift (68, 107) durch Verdrehen der Stellwelle (70) aus einer Entriegelungsstellung (ES) in eine Verriegelungsstellung (VS) und umgekehrt bringbar ist, wobei in besagter Verriegelungsstellung das Schaltzahnrad (60) relativ zur Getriebewelle (34) in der jeweiligen Rastposition axial fixiert und somit verriegelt ist.

2. Schalteinrichtung (55) nach Anspruch 1, **dadurch gekennzeichnet, dass** der Stellstift (68, 107) in einer sich radial zur Getriebewelle (34) erstreckenden Durchgangsbohrung (72, 110) geführt ist, die sich von der Stellwelle (70) zur Verbindungsnabe (56) erstreckt, wobei die Durchgangsbohrung (72, 110) eine erste Öffnung (74) zur Stellwelle (70) und eine zweite Öffnung (76) zur Verbindungsnabe (56) aufweist.

3. Schalteinrichtung (55) nach Anspruch 1 und/oder 2, **dadurch gekennzeichnet, dass** die Verbindungsnabe (56) getriebewellenseitig mit mehreren axial zur Getriebewelle (34) beabstandeten Ringnuten (78. 80, 82) versehen ist, die jeweils mit dem Stellstift (68, 107) in Eingriff bringbar sind.

4. Schalteinrichtung (55) nach einem oder mehreren der Ansprüche 1 bis 3, **dadurch gekennzeichnet, dass** die Stellwelle (70) um ihre Längsachse verdrehbar ist, wobei die Stellwelle (70) einenends axial verschiebbar in einer in der Getriebewelle (34) koaxial angeordneten Führungsbohrung (84) und anderenends axial fixiert in einer mit der Verbindungsnabe (56) verbundenen Lagerbuchse (86) gelagert ist.

5. Schalteinrichtung (55) nach einem oder mehreren der Ansprüche 1 bis 4, **dadurch gekennzeichnet, dass** die Stellwelle (70) eine koaxial zur Getriebewelle (34) angeordnete Rotationsachse (87) aufweist, wobei auf der Stellwelle (70) ein Exzenterabschnitt (88) angeordnet ist, der mit dem Stellstift (68, 107) in Eingriff bringbar ist, wobei der Exzenterabschnitt (88) durch einen sich axial zur Stellwelle (70) erstreckenden Zylinder (90) ausgebildet ist, dessen Zylindermittenachse (92) radial zur Rotationsachse (87) der Stellwelle (70) beabstandet ist und dessen Durchmesser (DZ) kleiner als der Durchmesser der Stellwelle (DS) bemessen ist, so dass durch Verdrehen der Stellwelle (70) der federvorgespannte Stellstift (68, 107) aus einer Verriegelungsstellung (VS) in eine Entriegelungsstellung (ES) und umgekehrt bringbar ist.

6. Schalteinrichtung (55) nach Anspruch 5, **dadurch gekennzeichnet, dass** der Zylinder (90) mit mehreren axial zur Getriebewelle (34) beabstandeten Ringnuten (96, 98, 100) versehen ist, die jeweils mit dem Stellstift (68, 107) in Eingriff bringbar sind und zu den in der Verbindungsnabe (56) ausgebildeten Ringnuten (78, 80, 82) fluchten.

7. Schalteinrichtung (55) nach einem oder mehreren der Ansprüche 2 bis 6, **dadurch gekennzeichnet, dass** der Stellstift (68) einen ersten Stiftteil (102) und einen zweiten Stiftteil (104) umfasst und sich zwischen dem ersten und dem zweiten Stiftteil (102, 104) des Stellstiftes (68) eine Spannfeder (105) erstreckt, die den ersten Stiftteil 8102) und den zweiten Stiftteil (104) des Stellstiftes (68) entlang der Durchgangsbohrung (72) in entgegengesetzte Richtungen spannt, wobei sich der erste Stiftteil (102) des Stellstiftes (68) in die erste Öffnung (74) und der zweite Stiftteil (104) des Stellstiftes in die zweite Öffnung (76) erstreckt, so dass der Stellstift (68) einenends mit der Verbindungsnabe (56) und anderenends mit der Stellwelle (70) in Eingriff steht.

8. Schalteinrichtung (55) nach einem oder mehreren der Ansprüche 2 bis 6, **dadurch gekennzeichnet, dass** der Stellstift (107) einteilig ausgebildet ist und Stellstift (107) und die Durchgangsbohrung (110) jeweils mit einem Absatz (108, 112) versehen sind, wobei sich zwischen den Absätzen (108, 112) eine Spannfeder (105) erstreckt, die den Stellstift (107) in Richtung der Verbindungsnabe (56) vorspannt, wobei sich der Stellstift (107) einenends in die erste Öffnung (74) und anderenends in die zweite Öffnung (76) erstreckt, so dass der Stellstift (107) einenends mit der Verbindungsnabe (56) und anderenends mit der Stellwelle (107) in Eingriff bringbar ist.

9. Schalteinrichtung (55) nach einem oder mehreren der Ansprüche 3 bis 8, **dadurch gekennzeichnet, dass** der Stellstift (68, 107) sphärisch abgerundete Enden (114, 116) umfasst und die an der Verbindungsnabe (56) ausgebildeten Ringnuten (78, 80, 82) mit einer zu den sphärisch abgerundeten Enden des Stellstiftes (68, 107) korrespondierenden Ringnutform ausgebildet sind, wobei an den Flanken der jeweiligen Ringnuten (78, 80, 82) Steuerkanten (118) ausgebildet sind, die sich durch einen gegenüber der Krümmung der sphärisch ausgebildeten Enden (114, 116) des Stellstiftes (68, 107) flacheren Verlauf auszeichnen.

10. Getriebe (28), umfassend ein Antriebselement und eine Übersetzungsstufe, **gekennzeichnet durch** eine Schalteinrichtung (55) nach einem oder mehreren der Ansprüche 1 bis 9, wobei das Schaltzahnrad (60) in eine erste Rastposition (R1), mit der das Schaltzahnrad (60) mit der Übersetzungsstufe in Eingriff steht und in eine weitere Rastposition (R3) in der das Schaltzahnrad (60) direkt mit dem Antriebselement in Eingriff steht, bringbar ist.

11. Getriebe (28) nach Anspruch 10, **dadurch gekennzeichnet, dass** das Schaltzahnrad (60) in eine weitere Rastposition (R2) bringbar ist, in welche das Schaltzahnrad (60) in eine Neutralstellung bewegt wird.

12. Getriebe (28) nach Anspruch 10 oder 11, **dadurch gekennzeichnet, dass** die Übersetzungsstufe durch ein mit dem Antriebselement verbundenes Planetengetriebe ausgebildet ist, wobei ein Planetenträger des Planetengetriebes am Antriebselement angeordnet und ein mit den Planeten (46) im Eingriff stehendes Sonnenrad (44) auf der Getriebewelle (34) und am Antriebselement drehbar gelagert und gegenüber Antriebselement und Getriebewelle (34) festgestellt ist.

13. Getriebe (28) nach einem oder mehreren der Ansprüche 10 bis 12, **dadurch gekennzeichnet, dass** das Antriebselement als Riemenscheibe (26) ausgebildet und die Getriebewelle (34) mit einer Bearbeitungseinrichtung (22) verbindbar ist.

14. Erntemaschine (10), umfassend wenigstens eine Bearbeitungseinrichtung (22) und ein Getriebe (28) nach Anspruch 13, wobei die Riemenscheibe (26) durch einen Riementrieb (20) angetrieben und die Getriebewelle (34) mit der wenigstens einen Bearbeitungseinrichtung (22) verbunden ist.

## Claims

1. Shifting device (55) for a transmission (28), having a transmission shaft (34) and a shifting gear wheel (60) mounted thereon, wherein the shifting gear wheel (60) is formed with a connecting hub (56) that is axially displaceable with respect to the transmission shaft (34), wherein the connecting hub (56) has an internal toothing (58) which is in engagement with an external toothing (52) of the transmission shaft (34), such that the shifting gear wheel (60) is drive-connected to the transmission shaft (34) so as to be axially displaceable therewith, and having a latching device (66) with which the shifting gear wheel (60) is axially displaceable into a plurality of latching positions (R1, R2, R3), wherein the latching device (66) comprises a spring-pretensioned setting pin (68, 107) which is displaceably mounted radially with respect to the transmission shaft (34), **characterized in that** the setting pin (68, 107) is in engagement with a setting shaft (70) which is rotatably mounted in the transmission shaft (34) and by means of which the setting pin (68, 107) is able to be moved out of an unlocked position (ES) into a locked position (VS) and vice versa by rotating the setting shaft (70), wherein, in said locked position, the shifting gear wheel (60) is axially fixed in the respective latching position relative to the transmission shaft (34) and is thus locked.

2. Shifting device (55) according to Claim 1, **characterized in that** the setting pin (68, 107) is guided in a through-bore (72, 110) extending radially with respect to the transmission shaft (34), said through-bore (72, 110) extending from the setting shaft (70) to the connecting hub (56), wherein the through-bore (72, 110) has a first opening (74) to the setting shaft (70) and a second opening (76) to the connecting hub (56).

3. Shifting device (55) according to Claim 1 and/or 2, **characterized in that** the connecting hub (56) is provided, on the transmission shaft side, with a plurality of annular grooves (78, 80, 82) that are axially spaced apart from the transmission shaft (34) and are respectively able to be brought into engagement with the setting pin (68, 107).

4. Shifting device (55) according to one or more of Claims 1 to 3, **characterized in that** the setting shaft (70) is rotatable about its longitudinal axis, wherein the setting shaft (70) is mounted at one end so as to be axially displaceable in a guide bore (84) arranged coaxially in the transmission shaft (34) and at the other end so as to be axially fixed in a bearing bush (86) connected to the connecting hub (56).

5. Shifting device (55) according to one or more of Claims 1 to 4, **characterized in that** the setting shaft (70) has an axis of rotation (87) arranged coaxially with the transmission shaft (34), wherein an eccentric portion (88) which is able to be brought into engagement with the setting pin (68, 107) is arranged on the setting shaft (70), wherein the eccentric portion (88) is formed by a cylinder (90) extending axially with respect to the setting shaft (70), the cylinder central axis (92) of said cylinder (90) being spaced apart radially from the axis of rotation (87) of the setting shaft (70), and the diameter (DZ) of said cylinder (90) being smaller than the diameter (DS) of the setting shaft such that, by rotating the setting shaft (70), the spring-preloaded setting pin (68, 107) is able to be brought out of a locked position (VS) into an unlocked position (ES) and vice versa.

6. Shifting device (55) according to Claim 5, **characterized in that** the cylinder (90) is provided with a plurality of annular grooves (96, 98, 100) which are spaced apart axially from the transmission shaft (34), are respectively able to be brought into engagement with the setting pin (68, 107) and are aligned with the annular grooves (78, 80, 82) formed in the connecting hub (56).

7. Shifting device (55) according to one or more of Claims 2 to 6, **characterized in that** the setting pin (68) comprises a first pin part (102) and a second pin part (104) and a tension spring (105) extends between the first and the second pin part (102, 104) of the setting pin (68), said tension spring (105) tensioning the first pin part 8102) and the second pin part (104) of the setting pin (68) along the through-bore (72) in opposing directions, wherein the first pin part (102) of the setting pin (68) extends into the first opening (74) and the second pin part (104) of the setting pin extends into the second opening (76), such that the setting pin (68) is in engagement at one end with the connecting hub (56) and at the other end with the setting shaft (70).

8. Shifting device (55) according to one or more of Claims 2 to 6, **characterized in that** the setting pin (107) is formed in one piece and the setting pin (107) and the through-bore (110) are each provided with a shoulder (108, 112), wherein a tension spring (105), which preloads the setting pin (107) in the direction of the connecting hub (56), extends between the shoulders (108, 112), wherein the setting pin (107) extends at one end into the first opening (74) and at the other end into the second opening (76), such that the setting pin (107) is able to be brought into engagement at one end with the connecting hub (56) and at the other end with the setting shaft (107).

9. Shifting device (55) according to one or more of Claims 3 to 8, **characterized in that** the setting pin (68, 107) comprises spherically rounded ends (114, 116) and the annular grooves (78, 80, 82) formed on the connecting hub (56) are formed with an annular groove shape corresponding to the spherically rounded ends of the setting pin (68, 107), wherein control edges (118), which are **characterized by** a flatter path compared with the curvature of the spherically formed ends (114, 116) of the setting pin (68, 107), are formed on the flanks of the respective annular grooves (78, 80, 82).

10. Transmission (28) comprising a drive element and a transmission stage, **characterized by** a shifting device (55) according to one or more of Claims 1 to 9, wherein the shifting gear wheel (60) is able to be moved into a first latching position (R1), in which the shifting gear wheel (60) is in engagement with the transmission stage, and into a further latching position (R3) in which the shifting gear wheel (60) is directly in engagement with the drive element.

11. Transmission (28) according to Claim 10, **characterized in that** the shifting gear wheel (60) is able to be moved into a further latching position (R2), in which the shifting gear wheel (60) is moved into a neutral position.

12. Transmission (28) according to Claim 10 or 11, **characterized in that** the transmission stage is formed by a planetary transmission connected to the drive element, wherein a planet carrier of the planetary transmission is arranged on the drive element and a sun wheel (44) in engagement with the planets (46) is rotatably mounted on the transmission shaft (34) and on the drive element and is fixed with respect to the drive element and the transmission shaft (34).

13. Transmission (28) according to one or more of Claims 10 to 12, **characterized in that** the drive element is in the form of a belt pulley (26) and the transmission shaft (34) is able to be connected to a processing device (22).

14. Harvesting machine (10) comprising at least one processing device (22) and a transmission (28) according to Claim 13, wherein the belt pulley (26) is driven by a belt drive (20) and the transmission shaft (34) is connected to the at least one processing device.

## Revendications

1. Dispositif de changement de vitesse (55) pour une transmission (28), comportant un arbre de transmission (34), une roue dentée de changement de vitesse (60) montée sur celui-ci, la roue dentée de changement de vitesse (60) étant pourvue d'un moyeu de connexion (56) déplaçable axialement par rapport à l'arbre de transmission (34), le moyeu de connexion (56) comprenant une denture intérieure (58) qui s'engrène avec une denture extérieure (52) de l'arbre de transmission (34), de sorte que la roue dentée de changement de vitesse (60) soit en connexion d'entraînement avec l'arbre de transmission (34) de manière déplaçable axialement sur celui-ci, et un dispositif d'encliquetage (66), au moyen duquel la roue dentée de changement de vitesse (60) est déplaçable axialement dans plusieurs positions d'encliquetage (R1, R2, R3), le dispositif d'encliquetage (66) comportant une goupille de réglage (68, 107) montée de manière déplaçable radialement par rapport à l'arbre de transmission (34) et précontrainte par ressort, **caractérisé en ce que** la goupille de réglage (68, 107) est en prise avec un arbre de réglage (70) monté rotatif dans l'arbre de transmission (34), arbre de réglage au moyen duquel la goupille de réglage (68, 107) peut être amenée d'une position de déverrouillage (ES) à une position de verrouillage (VS) et inversement par rotation de l'arbre de réglage (70), la roue dentée de changement de vitesse (60) étant fixée axialement par rapport à l'arbre de transmission (34) dans la position d'encliquetage respective et ainsi verrouillée dans ladite position de verrouillage.

2. Dispositif de changement de vitesse (55) selon la revendication 1, **caractérisé en ce que** la goupille de réglage (68, 107) est guidée dans un alésage traversant (72, 110) s'étendant radialement par rapport à l'arbre de transmission (34), lequel alésage traversant s'étend à partir de l'arbre de réglage (70) jusqu'au moyeu de connexion (56), l'alésage traversant (72, 110) comprenant une première ouverture (74) par rapport à l'arbre de réglage (70) et une deuxième ouverture (76) par rapport au moyeu de connexion (56).

3. Dispositif de changement de vitesse (55) selon la revendication 1 et/ou 2, **caractérisé en ce que** le moyeu de connexion (56) est doté, du côté de l'arbre de transmission, de plusieurs rainures annulaires (78, 80, 82) espacées axialement de l'arbre de transmission (34), lesquelles peuvent être amenées en prise respectivement avec la goupille de réglage (68, 107).

4. Dispositif de changement de vitesse (55) selon l'une ou plusieurs des revendications 1 à 3, **caractérisé en ce que** l'arbre de réglage (70) peut tourner autour de son axe longitudinal, l'arbre de réglage (70) étant monté à une extrémité de manière déplaçable axialement dans un alésage de guidage (84) disposé coaxialement dans l'arbre de transmission (34) et à l'autre extrémité de manière fixée axialement dans une douille de palier (86) connectée au moyeu de connexion (56).

5. Dispositif de changement de vitesse (55) selon l'une ou plusieurs des revendications 1 à 4, **caractérisé en ce que** l'arbre de réglage (70) comprend un axe de rotation (87) disposé coaxialement par rapport à l'arbre de transmission (34), une partie excentrique (88) étant disposée sur l'arbre de réglage (70), laquelle peut être amenée en prise avec la goupille de réglage (68, 107), la partie excentrique (88) étant formée par un cylindre (90) s'étendant axialement par rapport à l'arbre de réglage (70), cylindre dont l'axe médian (92) est espacé radialement de l'axe de rotation (87) de l'arbre de réglage (70) et dont le diamètre (DZ) est dimensionné de manière à être inférieur au diamètre de l'arbre de réglage (DS), de sorte que, par rotation de l'arbre de réglage (70), la goupille de réglage (68, 107) précontrainte par ressort peut être amenée d'une position de verrouillage (VS) à une position de déverrouillage (ES) et inversement.

6. Dispositif de changement de vitesse (55) selon la revendication 5, **caractérisé en ce que** le cylindre (90) est doté de plusieurs rainures annulaires (96, 98, 100) espacées axialement par rapport à l'arbre de transmission (34), lesquelles peuvent être amenées en prise respectivement avec la goupille de réglage (68, 107) et sont alignées avec les rainures annulaires (78, 80, 82) formées dans le moyeu de connexion (56).

7. Dispositif de changement de vitesse (55) selon l'une ou plusieurs des revendications 2 à 6, **caractérisé en ce que** la goupille de réglage (68) comporte une première partie de goupille (102) et une deuxième partie de goupille (104) et un ressort de tension (105) s'étend entre la première et la deuxième partie de goupille (102, 104) de la goupille de réglage (68), lequel ressort de tension tend la première partie de goupille 8102) et la deuxième partie de goupille (104) de la goupille de réglage (68) le long de l'alésage traversant (72) dans des sens opposés, la première partie de goupille (102) de la goupille de réglage (68) s'étendant dans la première ouverture (74) et la deuxième partie de goupille (104) de la goupille de réglage s'étendant dans la deuxième ouverture (76), de sorte que la goupille de réglage (68) soit en prise avec le moyeu de connexion (56) à une extrémité et avec l'arbre de réglage (70) à l'autre extrémité.

8. Dispositif de changement de vitesse (55) selon l'une ou plusieurs des revendications 2 à 6, **caractérisé en ce que** la goupille de réglage (107) est formée d'une seule pièce et la goupille de réglage (107) et l'alésage traversant (110) sont dotés respectivement d'un épaulement (108, 112), un ressort de tension (105) s'étendant entre les épaulements (108, 112), lequel ressort de tension précontraint la goupille de réglage (107) en direction du moyeu de connexion (56), la goupille de réglage (107) s'étendant dans la première ouverture (74) à une extrémité et dans la deuxième ouverture (76) à l'autre extrémité, de sorte que la goupille de réglage (107) puisse être amenée en prise avec le moyeu de connexion (56) à une extrémité et avec l'arbre de réglage (107) à l'autre extrémité.

9. Dispositif de changement de vitesse (55) selon l'une ou plusieurs des revendications 3 à 8, **caractérisé en ce que** la goupille de réglage (68, 107) comporte des extrémités (114, 116) arrondies de manière sphérique et les rainures annulaires (78, 80, 82) formée sur le moyeu de connexion (56) sont pourvues d'une forme de rainure annulaire correspondant aux extrémités arrondies de manière sphérique de la goupille de réglage (68, 107), des arêtes de commande (118) étant formées au niveau des flancs des rainures annulaires (78, 80, 82) respectives, lesquelles arêtes de commande se caractérisent par une allure plus plate que la courbure des extrémités (114, 116) arrondies de manière sphérique de la goupille de réglage (68, 107).

10. Transmission (28), comportant un élément d'entraînement et un étage de démultiplication, **caractérisée par** un dispositif de changement de vitesse (55) selon l'une ou plusieurs des revendications 1 à 9, la roue dentée de changement de vitesse (60) pouvant être amenée dans une première position d'encliquetage (R1) dans laquelle la roue dentée de changement de vitesse (60) s'engrène avec l'étage de démultiplication et dans une autre position d'encliquetage (R3) dans laquelle la roue dentée de changement de vitesse (60) s'engrène directement avec l'élément d'entraînement.

11. Transmission (28) selon la revendication 10, **caractérisée en ce que** la roue dentée de changement de vitesse (60) peut être amenée dans une autre position d'encliquetage (R2) dans laquelle la roue dentée de changement de vitesse (60) est déplacée dans une position neutre.

12. Transmission (28) selon la revendication 10 ou 11, **caractérisée en ce que** l'étage de démultiplication est formé par une transmission planétaire connectée à l'élément d'entraînement, un porte-satellites de la transmission planétaire étant disposé au niveau de l'élément d'entraînement et une roue planétaire (44) s'engrenant avec les satellites (46) étant montée rotative sur l'arbre de transmission (34) et au niveau de l'élément d'entraînement et étant fixe par rapport à l'élément d'entraînement et à l'arbre de transmission (34) .

13. Transmission (28) selon l'une ou plusieurs des revendications 10 à 12, **caractérisée en ce que** l'élément d'entraînement est réalisé sous forme de poulie à courroie (26) et l'arbre de transmission (34) peut être connecté à un dispositif de traitement (22).

14. Machine de récolte (10), comportant au moins un dispositif de traitement (22) et une transmission (28) selon la revendication 13, la poulie à courroie (26) étant entraînée par un entraînement à courroie (20) et l'arbre de transmission (34) étant connecté à l'au moins un dispositif de traitement (22).
